# EUROPÄISCHE PATENTSCHRIFT

(11) **EP 3 293 046 B1**
(45) Veröffentlichungstag und Bekanntmachung des Hinweises auf die Patenterteilung: **15.07.2020**
(21) Anmeldenummer: 17001464.1
(22) Anmeldetag: 31.08.2017
(51) Int. Cl.: B60P 3/00, B60P 7/00

(54) **FAHRZEUGAUFBAU**
VEHICLE SUPERSTRUCTURE
CARROSSERIE

(30) Priorität: 12.09.2016 DE 102016010881
(43) Veröffentlichungstag der Anmeldung: 14.03.2018
(73) Patentinhaber: Fahrzeugwerk Bernard Krone GmbH & Co. KG, 49757 Werlte (DE)
(72) Erfinder: Horstmann, Jan, 48431 Rheine (DE)
(74) Vertreter: Pott, Ulrich

(56) Entgegenhaltungen:
- DE-A1-102013 019 903
- DE-A1-102014 118 893
- DE-B3-102005 001 480

## Beschreibung

Die Erfindung bezieht sich auf einen Fahrzeugaufbau mit einem sich oberhalb eines Laderaumbodens erstreckenden Laderaumes, der durch Stirnwände, Seitenwände und/oder eine bewegbare Schiebeplane begrenzbar ist und der im Bereich von Seitenwänden und/oder von seitlichen Schiebeplanen Außenbaumprofile aufweist, die auf Eckrungen und/oder Seitenrungen abgestützt sind, und mit zumindest einer Erkennungseinrichtung zur Identifizierung des Ladegutes innerhalb des Laderaumes.

Fahrzeugaufbauten der vorgenannten Art sind bekannt und haben je nach Einsatzzweck des Fahrzeugaufbaus sich zwischen Stirnwänden erstreckende Seitenwände oder auch sich zwischen Stirnwänden erstreckende Schiebeplanen. Vielfach sind diese Aufbauten mit Seiten- und/oder Eckrungen ausgerüstet. Gemeinsam ist solchen Fahrzeugaufbauten, dass sie einen Laderaum aufweisen, in dem das Ladegut zu transportieren ist. Je nach Geometrie und äußeren Abmessungen des Ladegutes ist dabei der Laderaum mehr oder weniger ausgenutzt.

Zu einer beförderungssicheren Beladung gehört jedoch bei jedem Fahrzeugaufbau das sichere Stapeln, Stauen, Verzurren, Verkeilen, Verspannen und/oder Sichern des Ladegutes derart, dass bei normaler vertragsgemäßer Beförderung auch in verkehrlich bedingten Extremsituationen durch Ladeveränderungen des Fahrzeugaufbaus weder das Ladegut noch der Fahrzeugaufbau beschädigt werden darf und auch das Ladegut durch ein Verrutschen des Ladegutes keine verkehrlichen Risiken verursachen darf. Der Fahrzeugaufbau muss dabei unter Beachtung von vorgeschriebenen Abmessungen, Gewichten und Achslasten in der Lage sein, das Ladegut verkehrssicher zu transportieren.

Es ist inzwischen bekannt geworden, Fahrzeugaufbauten mit ortsfest montierten Sensoren auszurüsten, die am Ladegut oder an geeigneten Teilen am Laderaum befestigt sind. Dazu ist, um das Ladegut zu identifizieren, eine Vielzahl von Sensoren als Erkennungseinrichtungen zu verbauen, um es zu ermöglichen, beispielsweise eine dreidimensionale Darstellung des Laderaumes und/oder des Lagegutes für einen Fahrzeugführer visuell wahrnehmbar darzustellen. Die bekannten Lösungen mit der Vielzahl von fest angebauten Sensoren sind bauaufwändig und erfordern eine Vielzahl von Übertragungsmitteln, um die ermittelten Daten an eine Datenverarbeitungseinrichtung zu übermitteln. Be- und Entladungsvorgänge können Schaden an der Vielzahl von Sensoren verursachen.

Aus der DE 10 2005 001 480 B3 ist ein Fahrzeugaufbau der eingangs genannten Art bekannt, bei der eine Vorrichtung zur Erfassung der Ausnutzung eines Laderaumes durch eine Beladung bekannt ist. Dabei soll eine geometrische Größe der Beladung in dem Laderaum ermittelt werden. Dazu ist ein Ultraschallsensor vorgesehen, der entlang einer Laufschiene verfahrbar angeordnet ist, die in der Mitte der Decke des Laderaumes angebracht ist. Der Ultraschallsensor sendet Ultraschallsignale nach unten in Richtung der Ladung. Die Ladung reflektiert die gesendeten Ultraschallsignale. Nachteil hierbei ist, dass nur Höhenabstände zur Decke zu ermitteln sind, so dass ein seitliches Verrutschen der Ladung im Laderaum nicht zu identifizieren ist.

Aus der DE 10 2005 026 652 A1 ist eine Videoüberwachungsanlage bekannt, bei der mit Hilfe einer Überwachungskamera und einer elektronischen Speichereinrichtung zur Speicherung von Bildern Eingangsbereiche von Gebäuden zu überwachen sind. Dabei können transparente Rohre Verwendung finden, in denen eine Rohrkapsel verfahrbar angeordnet ist, in der die Überwachungskamera anzuordnen ist. Mit dieser Überwachungskamera kann damit nur ein bestimmter Bereich eines Eingangsbereiches überwacht werden, so dass diese Kamera nicht in einem Fahrzeug Verwendung finden kann, um ein seitliches Verrutschen der Ladung zu identifizieren.

Es ist Aufgabe der vorliegenden Erfindung, einen Fahrzeugaufbau der eingangs genannten Art derart zu verbessern, dass mit der Erkennungseinrichtung individuell der Beladungszustand des Fahrzeuges mit verringerten Bauaufwand ermittelbar ist.

Zur Lösung dieser Aufgabe zeichnet sich der Fahrzeugaufbau der eingangs genannten Art dadurch aus, dass die Erkennungseinrichtung als PMD-Kamera (Photonic Mixing Device-Kamera) und/oder als Laser-Scanner ausgebildet ist und eine Belichtungsvorrichtung aufweist zur Aussendung von Lichtsignalen sowie mit einem TOF-Sensor (Time of Flight-Sensor) versehen ist mit einer Auswerteeinheit, die die Reflektionszeit für jedes zu einem Objekt ausgesendetes Lichtsignal ermittelt und an eine Datenverarbeitungseinheit weiterleitet.

Mit dieser Art der Laderaumerkennungsvorrichtung kann der genutzte oder nicht genutzte Laderaum auf dem Fahrzeugaufbau in Echtzeit identifiziert werden und z. B. auf einem Arbeitsplatz sichtbar gemacht werden, der von dem Fahrzeugaufbau weit entfernt ist. Dazu können z. B. über bereits ggf. vorhandene Verkehrstelematiksysteme weitere Fahrzeugaufbaubetriebsdaten wie Gewichtsdaten, Temperaturdaten, Fahrzeugbetriebsdaten, GPS-Daten u. dgl. mehr über das Telematiksystem nacheinander oder parallel übertragen werden.

In dem Fahrzeugaufbau sind ein oder mehrere PMD-Kamerasensoren (Photonic Mixing Device-Kamerasensor) und/oder ein Laser-Scanner eingesetzt, der bzw. die dreidimensionale Räume erfassen können und somit die Gesamttiefe des Fahrzeugaufbaus in Echtzeit oder periodisch überwachen. Dazu weist die PMD-Kamera (PMD-Sensor) eine gesteuerte Beleuchtungsvorrichtung auf und einen mit der Beleuchtungsvorrichtung kommunizierenden Sensor. Ein Photonen-Misch-Detektor (PMD-Sensor = Photonic Mixing Device) und/oder der Laserscanner ermitteln die Daten mit Hilfe des optischen Sensors nach dem Prinzip des Lichtlaufzeitverfahrens (Time of Flight) und haben dazu zumindest einen TOF-Sensor. Ein PMD-Sensor dient als Bildsensor in einer derartigen PMD- bzw. TOF-Kamera. Dazu wird der Laderaum mit dem Ladegut oder ohne Ladegut mittels eines modellierten Lichtsignales ausgeleuchtet und die PMD-Kamera misst für jeden Bildpunkt bzw. Lichtsignal die Zeit, die das Lichtsignal bis hin zum Objekt, also z. B. bis hin zum Ladegut, und wieder zurück zum Sensor benötigt. Die benötigte Zeit ist direkt proportional zur Distanz. Die PMD-Kamera liefert somit für jeden Bildpunkt die Entfernung des darauf abgebildeten Objektes.

Die Laderaumfläche kann dabei in beliebig konfigurierbare Sektionen eingeteilt werden, z. B. in einer Größe von 1 m x 1 m. Jede Sektion kann dabei beladen oder unbeladen sind. Die Identifizierung des Laderaumes ergibt ein dreidimensionales digitales Modell des Laderaumes inklusive der Beladung von dem Standort der PMD-Kamera bzw. des Laser-Scanners aus gesehen. Da Fahrzeugaufbauten in der Regel von der Heckseite, also von hinten, beladen werden, ist die Positionierung der PMD-Kamera bzw. des Laser-Scanners im Heckbereich bzw. am Heckportal sinnvoll. Es ist allerdings auch möglich, mehrere PMD-Kameras an mehreren Standorten innerhalb des Laderaumes zu platzieren.

Die ermittelten 3D-Beladungsinformationen können einfach an eine Infrastruktur, z. B. an einen Server oder an ein Telematikportal weitergeleitet werden, indem erfindungsgemäß von der PMD-Kamera die Bilder über einen CAN-Bus und/oder Ethernet/LAN/WLAN/Bluetooth u. a. an ein Telematiksystem weitergeleitet werden und beispielsweise dort über das Mobilfunknetz an einen vom Fahrzeugaufbau entfernten Arbeitsplatz weitergeleitet werden. Von dort aus kann sich ein Benutzer, beispielsweise der Disponent, eine grafische und eine zahlenbasierte Darstellung des Fahrzeugaufbaus mit Ladegut anzeigen lassen. Dadurch sind Transportaufträge, Routen, statistische Erhebungen und so weiter mit einfachstem Bau- und Erfassungsaufwand zu ermitteln und zu verarbeiten. Dadurch kann auch festgestellt werden, ob die Ladung in dem Fahrzeugaufbau sich noch in dem Zustand befindet, wie sie beladen wurde. Dadurch lässt sich auch ein Verrutschen der Ladung identifizieren, und zwar ohne den Laderaum öffnen zu müssen. Des Weiteren kann ermittelt werden, ob das Ladegut noch vollständig ist oder ob etwa Diebstähle stattgefunden haben. Es lässt sich zudem ermitteln, ob und wieviel Ladung noch zugeladen werden kann.

Weitere Ausgestaltungen der Erfindung ergeben sich aus weiteren Unteransprüchen und der nachfolgenden Beschreibung und Zeichnung. In der Zeichnung zeigen
- Fig. 1:: in einer perspektivischen Ansicht ein Ausführungsbeispiel eines Nutzfahrzeugaufbaus mit jeweils geöffneten Seitenwänden mit einer PMD-Kamera im Laderaum;
- Fig. 2:: das Ausführungsbeispiel nach Fig. 1, von oben betrachtet mitteilweise geöffnetem Dach, und
- Fig. 3:: schematisch ein Ausführungsbeispiel einer PMD-Kamera mit Belichtungseinheit und einem TOF-Sensor (perspektivisch dargestellt)

In der Zeichnung sind übereinstimmende Teile mit übereinstimmende Bezugsziffern versehen.

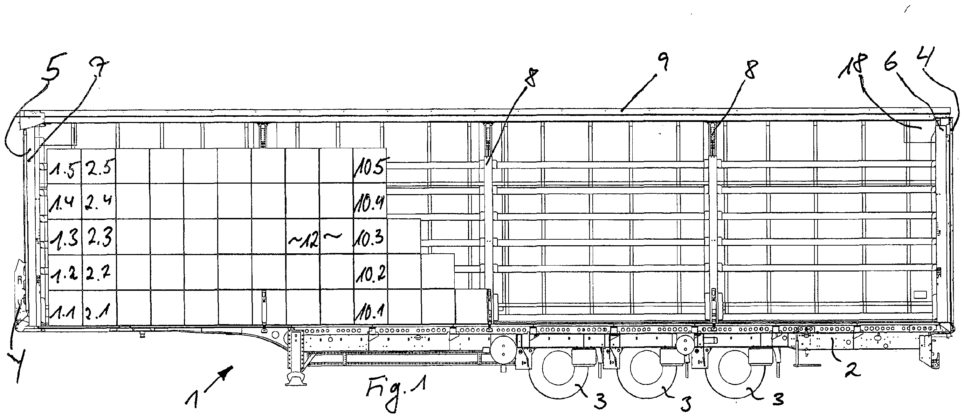

Allgemein mit 1 ist in Figur 1 ein Nutzfahrzeugaufbau beziffert mit einem Fahrgestellt 2, Rädern 3, Stirnwänden 4 und 5, Eckrungen 6 und 7, Seitenrungen 8, Außenbaumprofilen 9 und 10 sowie einem Dach. Die zuvor genannten Teile begrenzen einen allgemein mit 12 bezifferten Laderaum. In dem Ausführungsbeispiel kann als Seitenwandung eine Schiebeplane vorgesehen sein. Innerhalb des Laderaumes 12 sind Ladegüter zu bevorraten.

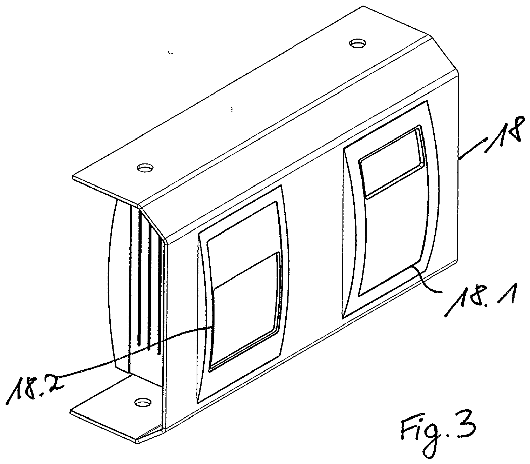

An einer Stelle innerhalb des Laderaumes 12 ist eine PMD-Kamera 18 angeordnet, die jeweils dreidimensionale Räume erfassen können. Dazu weist die PMD-Kamera 18 eine gesteuerte Beleuchtungsvorrichtung 18.1 (Fig. 3) auf und des Weiteren einen TOF-Sensor 18.2. An dem Nutzfahrzeugaufbau ist des Weiteren noch ein Telematik-Steuersystem vorgesehen, mit dem die PMD-Kamera 18 beispielsweise über Ethernet, LAN, WLAN u. dgl. in Verbindung steht und das des Weiteren in Verbindung steht mit einem Smartphone oder einem sonstigen Computer, um Daten über das Mobilfunknetz oder ein mobiles Drahtlosnetzwerk an einen Flottenbetreiber weiterzugeben. Die ermittelten Daten können zudem mittels WLAN, Bluetooth u. dgl. direkt ohne Nutzung eines Mobiltelefonnetzes an mobile Computer, Smartphones und/oder Tablet-PCs weitergeleitet werden zwecks Auswertung des Ladungszustand und/oder zwecks Information und/oder Warnung bei einem Verrutschen der Ladung oder bei z. B. einem Diebstahl.

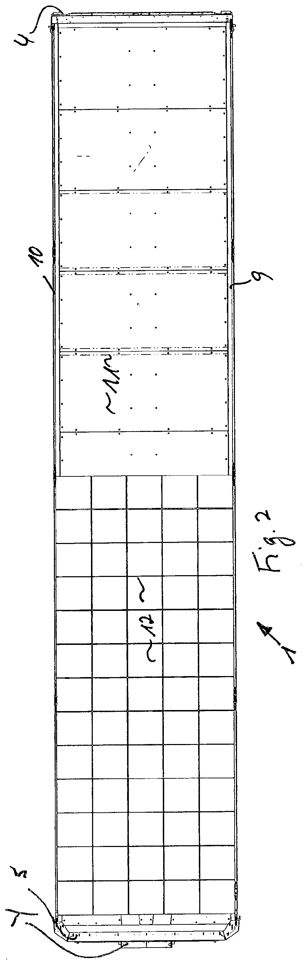

Die PMD-Kamera 18 sendet jeweils Lichtsignale aus, und zwar auf Sektionen, wie sie in Figur 1 und 2 mit den Ziffern 1.1 bis 12.1 angegeben sind. Diese Sektionen haben beispielsweise eine Größe von jeweils 1 m x 1 m. Mit der PMD-Kamera kann dabei über die Erfassung des dreidimensionalen Raumes ermittelt werden, ob beispielsweise in einer Sektion Ladegut steht oder nicht. Auch können diese Bilder verglichen werden, um beispielsweise das Verrutschen einer Ladung zu identifizieren.

## Patentansprüche

1. Fahrzeugaufbau (1) mit einem sich oberhalb eines Laderaumbodens erstreckenden Laderaumes (12), der durch Stirnwände (4, 5), Seitenwände und/oder eine bewegbare Schiebeplane (13) begrenzbar ist und der im Bereich von Seitenwänden und/oder von seitlichen Schiebeplanen (13) Außenbaumprofile (9, 10) aufweist, die an Eckrungen (6, 7) und/oder Seitenrungen (8) abgestützt sind, und mit zumindest einer Erkennungseinrichtung (18) zur Identifizierung des Ladegutes innerhalb des Laderaumes (12), **dadurch gekennzeichnet, dass** die Erkennungseinrichtung (18) mit zumindest einer PMD-Kamera (Photonic Mixing Device-Kamera) und/ oder einem Laser-Scanner, welche zumindest eine Belichtungseinheit (18.1) aufweist zur Aussendung von Lichtsignalen, sowie mit einem TOF-Sensor (Time of Flight-Sensor) (18.2) versehen ist mit einer Auswerteeinheit, die die Reflektionszeit für jedes zu einem Objekt ausgesendetem Lichtsignal ermittelt und an eine Datenverarbeitungseinheit (Y) weiterleitet, wobei die von der PMD-Kamera (17, 18) und/oder dem Laser-Scanner ermittelten Daten über Ethernet/LAP/CAN-Bus/WLan und/oder Bluetooth zu einer Telematik-Einheit (Y) weitergeleitet werden zur dreidimensionalen Darstellung des Laderaumes (12), wobei die Telematik-Einheit (Y) Daten an einen mobilen Computer (Smartphone, Tablet) weiterleitet und über auf dem mobilen Computer installierte Anwendungsprogramme Ladungsinformationen darstellbar sind.

2. Fahrzeugaufbau (1) nach Anspruch 1, **dadurch gekennzeichnet, dass** die PMD-Kamera (18) in einem Heckbereich des Fahrzeugaufbaus (1) angeordnet ist.

3. Fahrzeugaufbau (1) nach Anspruch 1 oder 2, **dadurch gekennzeichnet, dass** zwei oder mehr PMD-Kameras (18) vorgesehen sind.

4. Fahrzeugaufbau (1) nach einem der Ansprüche 1 bis 3, **dadurch gekennzeichnet, dass** der Laderaum (12) in frei konfigurierbare Sektionen eingeteilt ist.

5. Fahrzeugaufbau nach einem der Ansprüche 1 bis 4, **dadurch gekennzeichnet, dass** die Datenverarbeitungseinheit (Y) Bestandteil der PMD-Kamera oder des Laser-Scanners ist.

6. Fahrzeugaufbau nach Anspruch 1, **dadurch gekennzeichnet, dass** über die Telematik-Einheit (Y) ermittelte Daten an einen vom Laderaum (12) geografisch entfernten Ort weiterleitet.

## Claims

1. Vehicle body (1) comprising a cargo space (12) extending above a cargo-space floor, which cargo space can be delimited by end walls (4, 5), lateral walls and/or a movable sliding tarpaulin (13) and has outer beam profiles (9, 10) in the region of the lateral walls and/or lateral sliding tarpaulins (13), which outer beam profiles are supported on corner stakes (6, 7) and/or side stakes (8), and comprising at least one detection device (18) for identifying the cargo inside the cargo space (12), **characterised in that** the detection device (18) is provided with at least one PMD camera (photonic mixing device camera) and/or a laser scanner which has at least one exposure unit (18.1) for emitting light signals, and is provided with a TOF sensor (time of flight sensor) (18.2), having an evaluation unit which determines the reflection time for each light signal emitted to an object and forwards said time to a data processing unit (Y), the data determined by the PMD camera (17, 18) and/or the laser scanner being forwarded via Ethernet/LAP/CAN bus/WLAN and/or Bluetooth to a telematics unit (Y) for three-dimensional representation of the cargo space (12), the telematics unit (Y) forwarding data to a mobile computer (smartphone, tablet), and it being possible to represent cargo information using application programs installed on the mobile computer.

2. Vehicle body (1) according to claim 1, **characterised in that** the PMD camera (18) is arranged in a rear region of the vehicle body (1).

3. Vehicle body (1) according to either claim 1 or claim 2, **characterised in that** two or more PMD cameras (18) are provided.

4. Vehicle body (1) according to any of claims 1 to 3, **characterised in that** the cargo space (12) is divided into sections which can be configured freely.

5. Vehicle body according to any of claims 1 to 4, **characterised in that** the data processing unit (Y) is part of the PMD camera or the laser scanner.

6. Vehicle body according to claim 1, **characterised in that** the telematics unit (Y) forwards determined data to a location that is geographically remote from the cargo space (12).

## Revendications

1. Carrosserie (1) comprenant un espace de chargement (12) qui s'étend au-dessus d'un fond d'espace de chargement, qui peut être délimité par des parois frontales (4, 5), des parois latérales et/ou une bâche coulissante (13) et qui présente, au niveau des parois latérales et/ou des bâches coulissantes latérales (13), des profilés d'arbre extérieurs (9, 10) appuyés contre des ranchers d'angle (6, 7) et/ou des ranchers latéraux (8), et comprenant au moins un dispositif de reconnaissance (18) pour l'identification de la marchandise chargée à l'intérieur de l'espace de chargement (12), **caractérisée en ce que** le dispositif de reconnaissance (18) est muni d'au moins une caméra PMD (caméra Photonic Mixing Device) et/ou d'un lecteur laser qui présente au moins une unité d'éclairage (18.1) pour l'émission de signaux lumineux ainsi que d'un capteur TOF (capteur Time of Flight) (18.2) avec une unité d'évaluation qui détermine le temps de réflexion pour chaque signal lumineux émis vers un objet et le transfère vers une unité de traitement de données (Y), dans laquelle les données déterminées par la caméra PMD (17, 18) et/ou le lecteur laser sont transférées vers une unité de télématique (Y) par Ethernet/LAP/CAN-Bus/WLan et/ou Bluetooth pour obtenir une représentation en trois dimensions de l'espace de chargement (12), dans laquelle l'unité de télématique (Y) transfère des données vers un ordinateur portable (téléphone intelligent, tablette) et des informations de chargement peuvent être représentées par le biais de programmes d'application.

2. Carrosserie (1) selon la revendication 1, **caractérisée en ce que** la caméra PMD (18) est disposée dans une zone arrière de la carrosserie (1).

3. Carrosserie (1) selon la revendication 1 ou 2, **caractérisée en ce que** deux caméras PMD (18) ou plus sont prévues.

4. Carrosserie (1) selon une des revendications 1 à 3, **caractérisée en ce que** l'espace de chargement (12) est divisé en sections qui peuvent être configurées librement.

5. Carrosserie (1) selon une des revendications 1 à 4, **caractérisée en ce que** l'unité de traitement de données (Y) est un composant de la caméra PMD ou du lecteur laser.

6. Carrosserie selon la revendication 1, **caractérisée en ce que** les données déterminées par l'unité de télématique (Y) sont transférées vers un site géographiquement distant de l'espace de chargement (12).
